# EUROPEAN PATENT SPECIFICATION

(11) **EP 2 732 325 B1**
(45) Date of publication and mention of the grant of the patent: **10.02.2016**
(21) Application number: 12745419.7
(22) Date of filing: 12.07.2012
(51) Int. Cl.: G02B 7/18

(54) **BONDING OF TWO ELEMENTS USING A PATTERNED INTERFACE**
BINDUNG VON ELEMENTEN UNTER VERWENDUNG EINER STRUKTURIERTEN SCHNITTSTELLE
COLLAGE DE DEUX ÉLÉMENTS AU MOYEN D'UNE INTERFACE STRUCTURÉE

(30) Priority: 15.07.2011 DK 201100549 P; 18.07.2011 DK 201100551 P
(43) Date of publication of application: 21.05.2014
(73) Proprietor: 3Shape A/S, 1060 Copenhagen K (DK)
(72) Inventor: PETERSEN, Bo, DK-2870 Dyssegård (DK); HANSEN, Finn, DK-2670 Greve (DK)
(74) Representative: Guardian IP Consulting I/S
(86) International application number: PCT/EP2012/063690
(87) International publication number: WO 2013/010911

(56) References cited:
- US-A1- 2005 162 621
- US-A1- 2009 153 985

## Description

### Field of the invention

Pattern controlled bonding, Shape-controlled bonding, Fixation of optics, Stress-free bonding, Constrained bonding.

This invention relates in general to fixation by means of any type of adhesive of two- or more parts in an assembly consisting of one or more inhomogeneous part internally joined rigid together, e.g. lenses buildup as doublets or higher - or as the detailed example; Polarizing beam splitters. For fixation of these types of parts, it is beneficial, or even needed to constrain the fixation to only one of the sub-parts/elements, in order to prevent either optical degradation or in worst case physical damages due to thermal stress loading during operation. The invention is not limited to optical parts/assemblies; however the optical implementation is used as example - and this is the implemented use in a handheld intraoral 3D scanner called TRIOS manufactured by 3Shape A/S.

### Background of the invention

This problem is traditionally solved by preventing the bonding material in the area of "no-bond"-wanted; by cutting away unwanted bonding areas or sealing off the zone by a gasket to either keep the glue in or out. These methods are collective more difficult to perform and requires geometric changes to at least one part in the assembly and adds both cost to BOM (bill of materials) and cost due to the handling, whereas our proposed invention only add the cost of the low energy surface (the PTFE-tape in our case) and the extra handling time to add it, which in many cases will be neglectable.

Publication US 2009/0153985 discloses a frame prism retaining frame in which a prism is contained and plurality of adhesive pockets arranged around the prism retaining frame.

Publication US 6 748 132 B1 dicloses another assembly of particular interest.

### Description

Accordingly, in one aspect the invention relates to an assembly comprising at least one attachment part and a holder part to which the at least one attachment part is attached, wherein the attachment part is attached to the holder part with an adhesive in an interface area and a pattern control element is attached to one of the parts in the interface area, wherein the pattern control element comprises a non-stick surface.

The principal function of this invention is to limit the active adhesive area used for the fixation between two parts in a controlled way, but without controlling the adhesive area itself. This is obtained by adding a pattern control element to one of the parts in the interface, which have neglectable influence on the part it attach to, but effectively removing any bonding/adhesion between the two original parts in the area of this pattern control element. This method differentiates from other known methods in the way that it doesn't try to control the adhesive material, which in case of liquid glue or heat activated films (HAF) has proven very difficult; but instead prevents bonding by adding the pattern control element in the interface in the area(s) where bonding is prohibited. The area of this "no-bond" zone can be controlled by applying a pattern produced in a material that has a low surfaces energy relatively to the adhesive used. Various methods exist for applying this pattern, ranging from plasma applied coating or chemical coating to simple labels and tape stamped or cut to shape and manually applied to one of the parts.

The terms "pattern control element" and "patterned element" is used interchangeable throughout the present specification.

The application of this is for example advantageous where the two parts have different coefficients of thermal expansion (CTE). By being able to control the adhesive in the interface area it is possible to prevent detachment or unintended deformation by controlling where the parts bond to each other. Thus, by placing a non-adhesive pattern using the pattern control element it is possible to decide with very high precision where the parts are attached in a simple and effective manner.

The described setup is particular advantageous in embodiments where the attachment part is an inhomogeneous part comprising a first and a second element. Such first and second elements may for example be prisms, for example in cases where the inhomogeneous part is a beam splitter.

Such prisms are typically attached to each other in an attachment area by e.g. an adhesive. In cases where the holder part have a different CTE than the beam splitter stress will occur in the attachment area due to forces acting on the two prisms. This will alter the characteristics of the beam splitter and render the assembly useless and unreliable. Accordingly, an assembly as described herein has shown to be particularly suitable for beam splitters and other prism assemblies.

In some embodiment the pattern control element may be provided as a non-stick coating. The coating may be directly dispersed on the respective part during production.

In an alternative embodiment the pattern control element is a tape comprising a non-stick coating. Such tape may easily be cut and applied during production. Moreover a piece of tape may be cut with slightly larger dimensions than the part or element which it covers in order to ensure complete coverage.

The non-stick coating may advantageously be polytetrafluoroethylene (PTFE), such as Teflon. However, a silicone coating or other non-stick coating known in the art may be used. It should be understood that the non-stick characteristics of the pattern control element may change depending on the adhesive used. Thus, when applying the assembly as described herein the person skilled in the art would consider combinations of adhesive and pattern control elements that provide a non-stick coating that shows very low adhesive affinity to each other.

The pattern control element preferably covers at least one of the part elements in the interface area. It is thus completely prevented that the element covered adheres to the adhesive and unintentional forces are applied thereto.

The inhomogeneous part and the holder part preferably abut each other in the interface area.

As an example, below is shown the steps in adding a low energy surface in form of a PTFE-tape to an optical beam-splitter, consisting of two prisms, prior to gluing the beam-splitter to an aluminum holder by means of Epoxy glue.

### Drawings

Figure 1 a and 1 b shows the use of pattern control element in the shape of a masking (in this case, PTFE-tape) which covers the "no-bond" zone, including the transition plus tolerances, and
Figure 2 shows the PTFE-tape, shown cross-hatched, which prevents the upper half of the prism from being bonded to the aluminum holder by the Epoxy disposed in three milled cavities.

### Detailed description

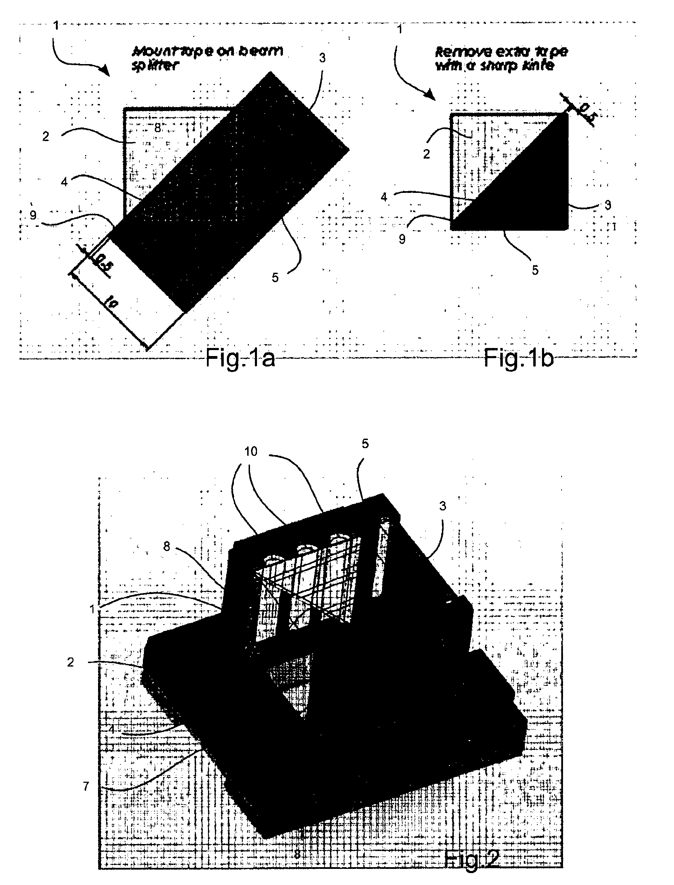

Figures 1 a and 1 b shows a beam splitter 1 formed of a first prism 2 and a second prism 3, which are cemented together in a refraction surface 4. As discussed then any opposite forces on the two prisms will result in tension in the refraction surface which will alter the characteristics and render the beam splitter useless.

Accordingly, in order to solve this problem a tape 5 having a non-stick surface 6 is applied to the sides of the beam splitter which are to be attached to a holder (7 in fig.2). The sides of the beam splitter and the surfaces of the holder to which the sides abut are referred to as interface areas 8.

The tape is applied so that it covers the surface of the second prism in the interface areas. Moreover a slight overlap 9 of the tape into the surface of the first prism is provided in order to ensure complete coverage.

When the tape has been applied the surplus material is cut away as seen in fig. 1b.

Figure 2 shows the beam splitter 1 placed in the holder 7, thereby providing an assembly as described herein. In order to secure the beam splitter in the holder it is adhered to the holder by an adhesive 10, such as epoxy.

During production no advanced techniques or accurate adhesive disposal system needs to be used since the non-stick surface of the tape 5 will prevent adhesive to stick to the surface of the second prism. Thus, only the first prism is effectively attached to the holder and if the holder expands differently than the beam splitter due to different CTE values, no tension will build up between the two prisms and the characteristics of the beam splitter will remain constant and reliable.

## Claims

1. An assembly comprising at least one attachment part (2) and a holder part (7) to which the at least one attachment part (2) is attached,
wherein the attachment part (2) is attached to the holder part (7) with an adhesive (10) in an interface area (8) and a patterned elementis (5) attached to one of the parts in the interface area (8), **characterised in that** the patterned element comprises a non-stick surface (6).

2. An assembly according to claim 1, wherein the attachment part is an inhomogeneous part comprising at least a first element and a second element.

3. An assembly according to claim 2, wherein the first and second elements are prisms.

4. An assembly according to claim 2 or 3, wherein the inhomogeneous part is a beam splitter.

5. An assembly according to any one of the claims 1 - 4, wherein the patterned element is a non-stick coating.

6. An assembly according to any one of the claims 1 - 4, wherein the patterned element is a tape comprising a non-stick coating.

7. An assembly according to claim 5 or 6, wherein the non-stick coating is polytetrafluoroethylene.

8. An assembly according to claim 2 and any one of the claims 3 - 7, wherein the patterned element covers at least one of the part elements in the interface area.

9. An assembly according to claim 2 and any one of the claims 3 - 8, wherein the inhomogeneous part and the holder part abuts each other in the interface area.

## Patentansprüche

1. Baugruppe, umfassend mindestens einen Befestigungsteil (2) und einen Halterteil (7), an dem der mindestens eine Befestigungsteil (2) befestigt ist,
wobei der Befestigungsteil (2) an dem Halterteil (7) mit einem Klebstoff (10) in einem Grenzflächenbereich (8) befestigt ist und ein strukturiertes Element (5) an einem der Teile in dem Grenzflächenbereich (8) befestigt ist, **dadurch gekennzeichnet, dass** das strukturierte Element eine nicht haftende Oberfläche (6) umfasst.

2. Baugruppe nach Anspruch 1, wobei der Befestigungsteil ein inhomogener Teil ist, der mindestens ein erstes Element und ein zweites Element umfasst.

3. Baugruppe nach Anspruch 2, wobei die ersten und zweiten Elemente Prismen sind.

4. Baugruppe nach Anspruch 2 oder 3, wobei der inhomogene Teil ein Strahlteiler ist.

5. Baugruppe nach einem der Ansprüche 1 bis 4, wobei das strukturierte Element eine nicht haftende Beschichtung ist.

6. Baugruppe nach einem der Ansprüche 1 bis 4, wobei das strukturierte Element ein Band ist, das eine nicht haftende Beschichtung umfasst.

7. Baugruppe nach Anspruch 5 oder 6, wobei die nicht haftende Beschichtung Polytetrafluorethylen ist.

8. Baugruppe nach Anspruch 2 und einem der Ansprüche 3 bis 7, wobei das strukturierte Element mindestens eines der Teilelemente in dem Grenzflächenbereich abdeckt.

9. Baugruppe nach Anspruch 2 und einem der Ansprüche 3 bis 8, wobei der inhomogene Teil und der Halterteil in dem Grenzflächenbereich aneinander anliegen.

## Revendications

1. Ensemble comprenant au moins une partie d'attache (2) et une partie de support (7) à laquelle l'au moins une partie d'attache (2) est attachée,
dans lequel la partie d'attache (2) est attachée à la partie de support (7) avec un adhésif (10) dans une zone d'interface (8) et un élément à motif (5) attaché à l'une des parties dans la zone d'interface (8), **caractérisé en ce que** l'élément à motif comprend une surface non collante (6).

2. Ensemble selon la revendication 1, dans lequel la partie d'attache est une partie non homogène comprenant au moins un premier élément et un second élément.

3. Ensemble selon la revendication 2, dans lequel les premier et second éléments sont des prismes.

4. Ensemble selon la revendication 2 ou 3, dans lequel la partie non homogène est un séparateur de faisceau.

5. Ensemble selon l'une quelconque des revendications 1 à 4, dans lequel l'élément à motif est un revêtement non collant.

6. Ensemble selon l'une quelconque des revendications 1 à 4, dans lequel l'élément à motif est un ruban comprenant un revêtement non collant.

7. Ensemble selon la revendication 5 ou 6, dans lequel le revêtement non collant est du polytétrafluoroéthylène.

8. Ensemble selon la revendication 2 et l'une quelconque des revendications 3 à 7, dans lequel l'élément à motif couvre au moins un des éléments partiels dans la zone d'interface.

9. Ensemble selon la revendication 2 et l'une quelconque des revendications 3 à 8, dans lequel la partie non homogène et la partie de support butent l'une contre l'autre dans la zone d'interface.
